# FASCICULE DE BREVET EUROPEEN

(11) **EP 2 965 806 B1**
(45) Date de publication et mention de la délivrance du brevet: **31.01.2018**
(21) Numéro de dépôt: 15175889.3
(22) Date de dépôt: 08.07.2015
(51) Int. Cl.: B01F 7/02, B01F 7/04, B01F 13/10, C02F 1/52

(54) **INSTALLATION DE TRAITEMENT D'EAU OU D'EFFLUENTS INDUSTRIELS COMPRENANT DES MOYENS D'AGITATION À MOYENS D'ENTRAINEMENT COMMUNS**
ANLAGE ZUR AUFBEREITUNG VON WASSER ODER INDUSTRIEABWÄSSERN, DIE RÜHRMITTEL MIT GEMEINSAMEN ANTRIEBSMITTELN UMFASST
WATER OR INDUSTRIAL EFFLUENT TREATMENT PLANT COMPRISING STIRRING MEANS WITH COMMON DRIVE MEANS

(30) Priorité: 08.07.2014 FR 1456593
(43) Date de publication de la demande: 13.01.2016
(73) Titulaire: Veolia Water Solutions & Technologies Support, 94417 Saint-Maurice Cedex (FR)
(72) Inventeur: EXPOSITO, Patrick, 82000 MONTAUBAN (FR); MEUDAL, Nicolas, 74600 SEYNOD (FR); ANGOT, Philippe, 35235 Thorigné-Fouillard (FR)
(74) Mandataire: Vidon Brevets & Stratégie

(56) Documents cités:
- JP-A- S57 132 541
- US-A- 1 809 672
- US-A- 4 710 290

## Description

### 1. Domaine de l'invention

Le domaine de l'invention est celui des installations de traitement :
- d'eau pouvant en particulier être mises en oeuvre pour procéder au traitement d'eaux usées (urbaines ou municipales) en vue de leur épuration avant rejet dans le milieu naturel ou à celui d'eaux naturelles en vue de leur potabilisation ou à celui d'eaux industrielles en vue de leur utilisation dans un processus industriel,
- d'effluents industriels en vue de leur épuration avant rejet dans le milieu naturel.

### 2. Art antérieur

Des installations de traitement d'eau sont couramment mises en oeuvre pour traiter des eaux notamment en vue de leur épuration ou de leur potabilisation.

De telles installations comprennent classiquement plusieurs cuves de traitement chacune dédiée à une phase particulière d'un procédé de traitement global.

Certaines phases des traitements d'eau consistent à mettre en contact l'eau à traiter avec des réactifs comme par exemple un réactif coagulant, un réactif floculant, un réactif adsorbant...

Chacune des cuves dédiées à la mise en oeuvre d'une phase de traitement impliquant un réactif loge des moyens d'agitation. De tels moyens d'agitation permettent de générer un mouvement de brassage à l'intérieur de la cuve afin de maximiser le contact entre les eaux à traiter et le réactif impliqué.

Ces moyens d'agitation prennent généralement la forme d'agitateur à pales. Un agitateur à pales comprend une hélice montée mobile en rotation autour d'un axe essentiellement vertical. Cette hélice est liée en rotation à un arbre d'entrainement qui est lui-même lié en rotation à l'arbre de sortie d'un moteur.

Une installation de traitement d'eau comprend donc classiquement autant d'agitateurs et de moteurs d'entrainement que l'installation comprend de cuves de traitement à l'intérieur desquelles les eaux à traiter doivent être mises en contact avec un réactif.

Ainsi, une installation de traitement d'eau comprenant une cuve de coagulation suivie d'une cuve de floculation, comprendra un premier agitateur logé dans la cuve de coagulation et muni d'un premier moteur et un deuxième agitateur logé dans la cuve de floculation et muni d'un deuxième moteur. La coagulation nécessite une agitation rapide afin d'avoir un mélange homogène alors que la floculation nécessite une agitation lente afin de ne pas casser les flocs. Les gradients d'agitation nécessaires à la coagulation et la floculation sont donc très différents. Les agitateurs respectivement logés dans la cuve de coagulation et dans la cuve de floculation sont donc configurés pur permettre d'y générer des degré d'agitation différents. En pratique, ils sont souvent entrainés en rotation selon des fréquences différentes.

Une telle mise en oeuvre tend bien entendu à complexifier la structure des installations de traitement d'eau et à augmenter leur coût. Elle tend également à augmenter le nombre et le coût des opérations de maintenance des installations de traitement d'eau dans la mesure où le nombre important d'équipements augmente les sources potentielles de défaillances.

Le document US-A-4 710 290 divulgue une installation de traitement d'eau ou d'effluents industriels selon le préambule de la revendication 1.

### 3. Objectifs de l'invention

L'invention a notamment pour objectif d'apporter une solution efficace à au moins certains de ces différents problèmes.

En particulier, selon au moins un mode de réalisation, un objectif de l'invention est de simplifier les installations de traitement d'eau mettant en oeuvre diverses cuves de traitement agitées.

Notamment, l'invention a pour objectif, selon au moins un mode de réalisation, de fournir une telle technique qui permette de simplifier la structure de telles installations.

Un autre objectif de l'invention est, selon au moins un mode de réalisation, de fournir une telle technique qui permette de simplifier la maintenance de telles installations.

Un autre objectif de l'invention est de fournir, dans au moins un mode de réalisation, une telle technique qui permette de réduire les sources de défaillances de telles installations.

Un autre objectif de l'invention est de fournir, dans au moins un mode de réalisation, une telle technique qui permette de réduire le coût de telles installations.

Un autre objectif de l'invention est de fournir, dans au moins un mode de réalisation, une telle technique qui soit fiable et/ou robuste.

### 4. Présentation de l'invention

Pour ceci, l'invention propose une installation de traitement d'eau ou d'effluents industriels selon la revendication 1. Au sens de l'invention les eaux à traiter incluent :
- les eaux naturelles (eaux de surfaces, eaux souterraines...) traitées dans le but d'être probabilisées ;
- les eaux usées (également appelées eaux municipales ou urbaines) traitées en vue d'être épurées avant leur rejet dans le milieu naturel ;
- les eaux industrielles traitées dans le but d'être utilisées pour la mise en oeuvre de processus industriels.

Les effluents industriels sont quant à eux des mélanges de produits liquides produits au cours de la mise en oeuvre de processus industriels et sont traités en vue d'être épurés avant leur rejet dans le milieu naturel.

Ainsi, selon cet aspect, l'invention repose sur une approche originale qui consiste à mettre en oeuvre des moyens d'entrainement communs pour entrainer en mouvement plusieurs agitateurs prévus dans des cuves de traitement distinctes d'une installation de traitement d'eau ou d'effluents industriels.

Contrairement aux techniques selon l'art antérieur, l'invention discutée ne met donc pas en oeuvre des moyens d'entrainement individuellement dédiés à l'entrainement d'un agitateur prévu dans une cuve de traitement.

De ce fait, l'invention permet de réduire le nombre de moyens d'entrainement des moyens d'agitation au sein d'une installation de traitement d'eau ou d'effluents industriels et ainsi d'en simplifier la structure et le coût. Ceci participe également à réduire les sources d'éventuelles défaillances, et par conséquent à simplifier la maintenance d'une installation de traitement d'eau ou d'effluents industriels ainsi que le coût inhérent à celle-ci.

Lesdits premiers et deuxièmes moyens d'agitation sont préférentiellement configurés pour générer des gradients d'agitation différents dans lesdites première et deuxième cuves de traitement.

Ces moyens d'agitation peuvent ainsi permettre de mélanger à l'eau ou aux effluents industriels des réactifs nécessitant des niveaux d'agitations différents en mettent toutefois en oeuvre des moyens d'entrainement communs.

Dans une variante, lesdits premiers moyens d'agitation comprennent des moyens pour dévier latéralement au moins une partie du contenu de ladite première cuve de traitement.

Le fait de dévier latéralement l'eau ou les effluents industriels dans une cuve de traitement permet d'y générer de l'agitation de manière efficace.

Dans une variante, une installation selon l'invention pourra comprendre des moyens d'amenée d'eau ou d'effluents industriels à traiter dans ladite première cuve de traitement, lesdits moyens pour dévier latéralement permettant de dévier au moins une partie du contenu de ladite première cuve de traitement vers lesdits moyens d'amenée d'eau ou d'effluents industriels à traiter.

Ceci permet de maximiser l'agitation et le cas échéant le mélange de l'eau ou des effluents industriels avec un réactif.

Dans une variante, lesdits moyens d'amenée d'eau ou d'effluents industriels à traiter comprennent un caisson de mélange, ledit caisson de mélange comprenant une entrée d'eau ou d'effluents industriels à traiter, une entrée d'un premier réactif, et une sortie d'un mélange d'eau ou d'effluents industriels à traiter et de premier réactif débouchant dans ladite première cuve de traitement, lesdits moyens pour dévier latéralement permettant de dévier latéralement au moins une partie du contenu de ladite première cuve de traitement dans ledit caisson de mélange.

La mise en oeuvre d'un tel caisson à l'intérieur duquel sont injectés l'eau ou les effluents industriels à traiter et le réactif et vers lequel l'eau ou les effluents industriels contenus dans la cuve de traitement sont en partie déviés, permet d'accroitre le mélange de l'eau ou des effluents industriels et du réactif. Lesdits premiers moyens d'agitation comprennent au moins un godet mélangeur solidaire d'une roue à godets montée mobile en rotation à l'intérieur de ladite première cuve de traitement, ledit au moins un godet mélangeur étant orienté de manière à dévier une partie du contenu de ladite première cuve latéralement dans ladite première cuve et/ou latéralement en direction desdits moyens d'amenée d'eau ou d'effluents industriels à traiter ou dans ledit caisson de mélange.

La mise en oeuvre d'une telle roue à godets permet de générer simplement mais efficacement de l'agitation à l'intérieur d'une cuve de traitement.

Dans une variante, ledit au moins un godet mélangeur comprend une entrée ménagée sur sa face avant et une sortie ménagée latéralement.

On génère ainsi un canal d'écoulement de fluide à l'intérieur du godet permettant de dévier latéralement le fluide de manière efficace.

Dans ce cas, ladite entrée pourra présenter une section plus grande que ladite sortie dudit au moins un godet mélangeur.

Il est ainsi possible d'accélérer l'écoulement de fluide à l'intérieur du godet ce qui contribue à augmenter l'agitation.

Dans une variante, une installation selon l'invention comprend des moyens d'amenée d'eau ou d'effluents industriels à traiter dans ladite première cuve, lesdits moyens d'amenée d'eau ou d'effluents industriels comprenant un caisson de mélange, ledit caisson de mélange comprenant une entrée d'eau ou d'effluents industriels à traiter et une sortie débouchant dans ladite première cuve de traitement, lesdits premiers moyens d'agitation comprenant au moins :
- un godet mélangeur solidaire d'une roue à godets montée mobile en rotation à l'intérieur de ladite première cuve de traitement, et
- une canalisation de chute s'étendant essentiellement verticalement, débouchant dans ledit caisson de mélange, et comprenant une entrée d'un premier réactif,
ledit au moins un godet mélangeur étant orienté pour se déverser à l'intérieur de ladite canalisation de chute.

La génération d'une chute d'eau ou d'effluents industriels à l'intérieur d'un caisson de mélange dans lequel sont injectés l'eau ou les effluents industriels à traiter et un réactif permet d'assurer un mélange efficace de l'eau ou des effluents industriels et du réactif.

Dans une variante, une installation selon l'invention comprend une pluralité de moyens de solidarisation réversible de godets mélangeurs à ladite roue à godets, lesdits godets mélangeurs étant amovibles.

Il est ainsi possible de choisir le nombre de godets mélangeurs mis en oeuvre pour adapter l'agitation générée dans la cuve aux conditions d'exploitations.

Dans une variante, une installation selon l'invention comprend des moyens d'acheminement du contenu de ladite première cuve de traitement dans ladite deuxième cuve de traitement, lesdits moyens d'acheminement comprenant :
- des godets de relevage solidaires de ladite roue à godets, et
- une goulotte débouchant dans ladite deuxième cuve de traitement, lesdits godets de relevage étant orientés par rapport à ladite goulotte pour déverser leur contenu dans ladite goulotte.

La roue à godets peut ainsi être classiquement utilisée pour relever le liquide contenu au fond d'une cuve de traitement en vue de l'acheminer dans une cuve placée en aval. Elle assure alors une double fonction de relevage et d'agitateur.

Dans une variante, lesdits deuxièmes moyens d'agitation comprennent une roue à pales montée mobile en rotation à l'intérieur de ladite deuxième cuve de traitement.

Le fait de plonger dans l'eau ou les effluents industriels une roue à pales mobile en rotation permet de générer dans l'eau ou les effluents industriels de l'agitation de manière simple et efficace.

Dans une variante, lesdits pales sont montées mobiles en rotation autour d'axes sensiblement parallèles à l'axe de rotation de ladite roue à pales, l'installation comprenant des moyens de réglage de l'orientation desdites pales autour desdits axes.

Il est ainsi possible de régler le niveau d'agitation généré par la roue à pales ainsi que les directions d'écoulement de fluide dans la cuve.

Dans une variante, ladite roue à pales comprend deux flancs latéraux entre lesquels sont placées lesdites pales, lesdits flancs latéraux étant traversés par des trous s'étendant selon des axes essentiellement parallèles à l'axe de rotation de ladite roue à pales.

La présence de ces trous permet de générer un mouvement circulant d'eau ou d'effluents industriels entre les trous de chaque flanc et l'extrémité périphérique extérieure de ceux-ci. Ceci tend à améliorer encore le brassage à l'intérieur de la cuve de traitement.

Dans une variante, lesdits moyens d'entrainement comprennent un arbre d'entrainement et un moteur dont la sortie est liée en rotation audit arbre d'entrainement, lesdites roues à godets et à pales étant liées en rotation audit arbre d'entrainement.

Ces moyens d'entrainement de structure simple permettent d'animer efficacement et avec robustesse les moyens d'agitation constitués des roues à godets et à pales. Ils peuvent également permettre de générer des gradients de vitesse différents d'une cuve à l'autre, sans système de démultiplication complexe.

Dans une variante, une installation selon l'invention comprend une cuve de filtration, ladite cuve de filtration logeant un tambour filtrant rotatif lié en rotation audit arbre d'entrainement, ladite installation comprenant des moyens d'acheminement du contenu de ladite deuxième cuve dans ledit tambour filtrant.

L'installation pourra alors permettre de mettre en oeuvre un procédé de traitement comprenant une filtration.

Dans une autre variante, une installation selon l'invention comprend une cuve de pré-décantation placée entre ladite deuxième cuve de traitement et ladite cuve de filtration, ladite cuve de pré-décantation comprenant des moyens d'extraction de boues et des moyens d'évacuation d'eau ou d'effluents industriels pré-décantés débouchant dans ledit tambour filtrant.

L'installation pourra alors permettre de mettre en oeuvre un procédé de traitement comprenant une pré-décantation pour améliorer l'efficacité de la filtration avale.

L'installation pourra comprendre des moyens d'extraction et de relevage de l'eau ou d'effluents industriels filtrés provenant de ladite cuve de filtration.

Dans une variante préférentielle, ces moyens d'extraction et de relevage pourront être constitués d'une roue à godets entrainée en rotation par le même arbre que les moyens d'agitation et de filtration.

Ceci permet de faire barboter le tambour filtrant dans un volume réduit d'eau ou d'effluents industriels et ainsi d'augmenter sa surface de filtration et ainsi sa capacité de traitement. Ceci permet également de remonter le niveau de l'eau ou d'effluents industriels traités afin de permettre dans certains cas leur évacuation ultérieure par gravité.

Dans une autre variante, une installation selon l'invention comprend une cuve de stockage desdits réactifs, ladite cuve de stockage étant placée en amont de ladite première cuve de traitement.

Ceci permet d'éviter la mise en oeuvre d'une pluralité de réservoirs de réactif à côté de l'installation.

Dans une variante, lesdites cuves sont solidaires les unes des autres et forment un ensemble monobloc.

L'installation constitue alors une unité de traitement globale qui peut être facilement intégrée sur un site ou dans un bâtiment d'un seul tenant. Elle pourra par exemple être enterrée ou semi-enterrée.

### 5. Liste des figures

D'autres caractéristiques et avantages de l'invention apparaîtront à la lecture de la description suivante de modes de réalisation particuliers, donnés à titre de simples exemples illustratifs et non limitatifs, et des dessins annexés parmi lesquels :
- la figure 1 illustre une vue de dessus d'une installation de traitement d'eau ou d'effluents industriels selon un premier mode de réalisation de l'invention ;
- la figure 2 illustre une vue de côté de l'installation représentée à la figure 1;
- la figure 3 illustre une vue de côté d'une roue à godets sur laquelle les godets de relevage ne sont pas représentés ;
- la figure 4 illustre une vue en perspective d'un godet mélangeur;
- la figure 5 illustre une vue en coupe transversale d'une cuve de coagulation d'une installation selon le premier mode de réalisation l'invention sur laquelle les godets de relevage ne sont pas représentés et les godets mélangeurs sont partiellement représentés;
- les figures 6 et 7 illustrent respectivement le déplacement des godets mélangeur dans l'eau et le déplacement de l'eau dans les godets mélangeurs ;
- la figure 8 illustre une vue de dessus en coupe de la cuve de coagulation de l'installation selon le premier mode de réalisation avec caisson mélangeur sur laquelle les mouvements d'eau à l'intérieur de la cuve sont représentés ;
- la figure 9 illustre une vue de dessus en coupe de la cuve de coagulation de l'installation selon le premier mode de réalisation sans caisson mélangeur sur laquelle les mouvements d'eau à l'intérieur de la cuve sont représentés ;
- la figure 10 illustre une vue en perspective d'une roue à pales d'une installation selon l'invention ;
- la figure 11 illustre une vue partielle en coupe transversale d'une cuve de floculation selon l'invention ;
- les figures 12 et 13 illustrent des vues partielles en coupe longitudinale d'une cuve de floculation selon l'invention ;
- la figure 14 illustre une vue partielle en coupe transversale d'une cuve de coagulation selon un deuxième mode de réalisation.

### 6. Description de modes de réalisation particuliers

### 6.1. Exemple d'un premier mode de réalisation d'une installation selon l'invention

### 6.1.1. Architecture

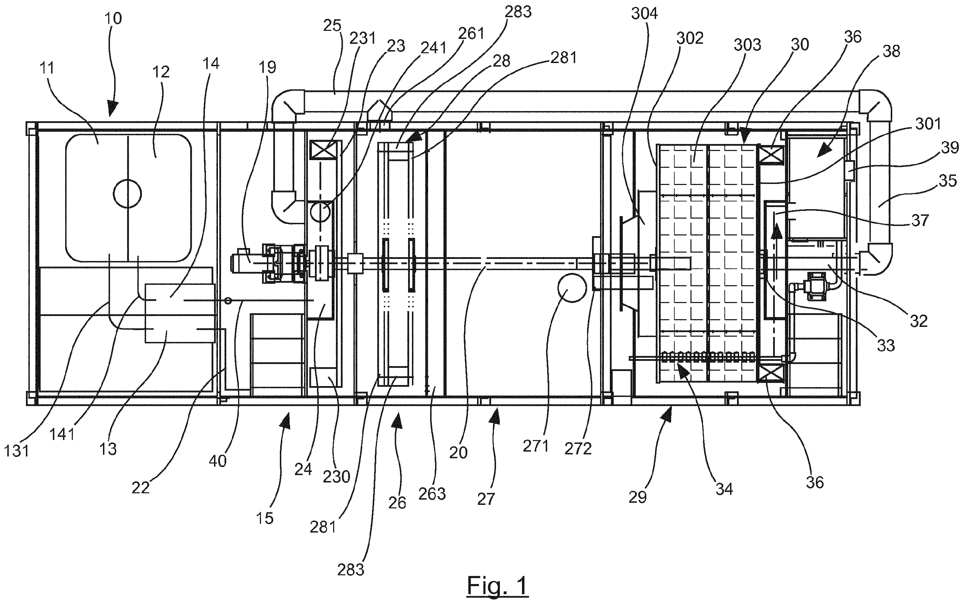

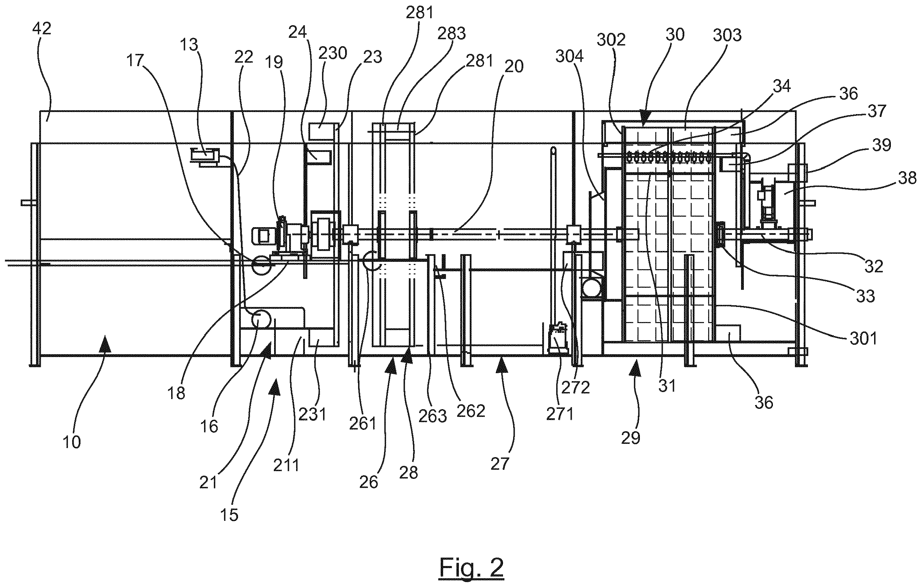

On présente, en relation avec les figures 1 à 13, un premier mode de réalisation d'une installation de traitement d'eau ou d'effluents industriels selon l'invention.

Ainsi que cela est représenté sur ces figures, une telle installation comprend une cuve de stockage de réactif 10.

Cette cuve de stockage de réactif 10 comprend un fond et quatre côtés définissant une enceinte étanche. Elle comprend des réservoirs de stockage de réactifs, en l'occurrence un réservoir de réactif coagulant 11 et un réservoir de réactif floculant 12. Dans des variantes, elle pourra loger d'avantage de réservoirs de stockage de réactifs. Les réactifs pourront également être d'autres natures en fonction des besoins. Du fait que la cuve de stockage de réactif 10 est étanche, on évite les fuites éventuelles de réactifs dans le milieu environnant.

Cette cuve de stockage 10 loge également des moyens d'injection des réactifs contenus dans les réservoirs de stockage 11, 12. Ces moyens d'injection comprennent des pompes 13, 14 dont les entrées sont respectivement reliées aux réservoirs 11, 12 par des canalisations 131, 141.

L'installation comprend une cuve de coagulation 15. Une canalisation d'amenée d'eau à traiter 16 débouche en partie inférieure de cette cuve de coagulation 15. Cette cuve de coagulation 15 est par ailleurs pourvue d'un trop-plein d'évacuation 17 qui s'étend à un niveau supérieur à celui de la canalisation d'amenée 16.

La cuve de coagulation 15 loge une plate-forme 18 qui s'étend au dessus du niveau du trop-plein 17. Cette plate-forme 18 porte un moteur 19. Le moteur 19 comprend un arbre de sortie auquel est lié en rotation un arbre d'entrainement 20 qui s'étend essentiellement horizontalement.

La cuve de coagulation 15 loge un caisson mélangeur 21. Ce caisson mélangeur 21 comprend une entrée 210 dans laquelle débouche la canalisation d'amenée d'eau à traiter 16, et une sortie 211 qui débouche dans la cuve de coagulation 15. La sortie 211 est orientée latéralement. Dans ce mode de réalisation, elle s'étend selon un axe essentiellement parallèle à l'axe de rotation de l'arbre d'entrainement 20. L'angle d'inclinaison de la sortie pourra toutefois être différent. Le caisson mélangeur 21 comprend en outre une entrée 213 de réactif coagulant à laquelle est reliée une canalisation d'injection 22 liée à la sortie de la pompe 13.

La cuve de coagulation 15 loge une roue à godets 23. Cette roue à godets 23 est liée en rotation à l'arbre d'entrainement 20. Elle porte des godets de relevage 230 et des godets mélangeurs 231.

La cuve de coagulation 15 loge une goulotte 24 dont la sortie 241 débouche dans une canalisation 25 d'acheminement de l'eau contenue dans la cuve de coagulation 15, laquelle canalisation débouche dans une cuve de floculation 26. Une canalisation d'injection de réactif floculant 40, reliée à la sortie de la pompe 14, débouche dans la goulotte 24.

Les godets de relevage 230 et la goulotte 24 sont agencés de telle sorte que lorsqu'un godet de relevage 230 se trouve, sous l'effet de la rotation de la roue à godets 23, au dessus de la goulotte 24 après avoir plongé dans l'eau coagulée se trouvant au fond de la cuve de coagulation 15 et s'être ainsi rempli d'eau, il déverse son contenu dans la goulotte 24.

Les godets mélangeurs 231 comprennent une entrée 2310 qui s'étend sur sa face avant, c'est-à-dire sur la face qui entre en premier en contact avec l'eau contenue dans la cuve de coagulation 15 lorsque la roue à godets 23 est animée d'un mouvement de rotation. Il comprend également une sortie 2311 qui s'étend dans une direction essentiellement parallèle à l'axe de rotation de la roue à godets 23 vers l'intérieur de la cuve de coagulation 15. L'entrée 2310 et la sortie 2311 d'un godet mélangeur 23 sont reliées par un canal d'écoulement 2312. Les godets mélangeurs 231 sont orientées de manière telle que lorsqu'ils arrivent au niveau du caisson mélangeur 21, leur sortie 2311 soit orientée en direction de la sortie 211 du caisson mélangeur 21. Dans ce mode de réalisation, l'entrée 2310 et la sortie 2311 s'étendent respectivement selon des faces inscrites dans des plans sensiblement perpendiculaires.

Dans une variante, le caisson mélangeur 21 pourra ne pas être mis en oeuvre. Dans ce cas, les godets mélangeurs 231 seront orientés de manière telle que leur sortie 2311 soit dirigée en direction de la sortie de la canalisation d'amenée d'eau à traiter 16 et de la sortie de la canalisation d'injection de réactif coagulant 22.

Il pourra également être prévu que les moyens d'injection de réactif, en l'occurrence de coagulant, débouchent n'importe où en amont ou dans la cuve de traitement.

Dans ce mode de réalisation, la section de l'entrée 2310 d'un godet mélangeur 231 est supérieure à celle de sa sortie 2311. Comme il sera expliqué plus en détail par la suite, ceci permet d'accélérer l'écoulement de l'eau circulant dans le canal d'écoulement 2312. Leurs sections pourront également être identiques. Le choix des sections pourra par exemple se faire en fonction des eaux à traiter et/ou du niveau d'agitation souhaité.

Par exemple, si les besoins hydrauliques sont faibles (voir nuls), par exemple pour mélanger deux fluides de même densité dans une cuve de faible volume, la section de sortie du godet serait la même que la section d'entrée. Alors, l'eau sortirait à la même vitesse que la vitesse d'avance du godet.

Si les besoins hydrauliques sont forts par exemple pour mélanger deux fluides de densités très différentes dans une cuve de faible volume, la section de sortie du godet serait petite en rapport à celle d'entrée. Alors, l'eau sortirait à la vitesse d'avance du godet multipliée par le rapport des sections entrée/sortie.

Il pourra être prévu que les godets mélangeurs ne présentent pas d'entrée reliée à une sortie par un canal. Ils pourraient selon une autre approche présenter la forme de simples déflecteurs orientés pour dévier latéralement l'eau.

Dans ce mode de réalisation, les godets mélangeurs 231 sont amovibles et sont solidarisés à la roue à godets 23 par des moyens de solidarisation réversible, tels que par exemple des vis. Il est ainsi possible de choisir le nombre de godets mélangeurs 231 mis en oeuvre afin d'ajuster le niveau d'agitation généré au sein de la cuve de coagulation 15.

L'installation comprend une cuve de floculation 26 placée en aval de la cuve de coagulation 15. Cette cuve de floculation 26 comprend une entrée 261 dans laquelle débouche la canalisation 25 d'amenée d'eau coagulée en provenance de la cuve de coagulation 15. Elle comprend également une sortie 262 qui débouche dans une cuve de pré-décantation 27 placée en aval de la cuve de floculation 26. Dans ce mode de réalisation, la sortie 262 de la cuve de floculation 26 comprend une paroi à déversoir 263, l'eau floculée passant au dessus de celle-ci s'écoulant dans la cuve de pré-décantation 27.

La cuve de floculation 26 loge une roue à pales 28. Cette roue à pales 28 est solidarisée en rotation à l'arbre d'entrainement 20. Dans ce mode de réalisation, elle comprend deux flancs latéraux 281 entre lesquels s'étendent des entretoises constituant des pales 283 selon des plans essentiellement parallèles à l'axe de rotation de la roue à pales 28. Chaque pale 281 est montée mobile en rotation autour d'un axe essentiellement parallèle à l'axe de rotation de la roue à pales 28 en sorte qu'il est possible de régler son orientation. Comme cela sera expliqué plus en détail par la suite, le réglage de l'orientation des pales 281 permet d'ajuster le niveau d'agitation généré à l'intérieur de la cuve de floculation 26 et/ou l'orientation des écoulements de flux à l'intérieur de la cuve de floculation 26.

Les flancs 281 sont dans ce mode de réalisation perforés par des trous 282 ménagés selon des axes essentiellement parallèles à l'axe de rotation de la roue à pales 28. Ces trous 282 sont préférentiellement répartis essentiellement régulièrement autour de l'axe de rotation de la roue à pales 28. Ils débouchent dans l'espace intérieur vide délimité par les flancs 281.

La paroi à déversoir 263 peut être montée mobile en translation le long de l'axe de l'arbre d'entrainement 20 de manière à faire varier le volume de la cuve de floculation 26. Ceci permet d'adapter les capacités de traitement de l'installation en termes de floculation selon la nature des eaux à traiter. Dans ce cas, la roue à pales 28 pourra être déplacée le long de l'arbre d'entrainement 20 pour permettre de la centrer dans la cuve de floculation. Ceci permet aussi de faire varier la taille de la cuve de décantation car elle n'est parfois pas nécessaire.

La cuve de pré-décantation 27 comprend en partie inférieure des moyens d'extraction d'une eau pré-décantée. Ces moyens d'extraction comprennent dans ce mode de réalisation une pompe d'extraction de boues de décantation 271. Elle comprend en partie supérieure des moyens d'extraction d'une eau décantée qui dans ce mode de réalisation comprennent une canalisation d'extraction d'eau décantée 272.

L'installation comprend une cuve de filtration 29 placée en aval de la cuve de pré-décantation 27. Cette cuve de filtration 29 loge un tambour filtrant 30.

Ce tambour filtrant 30 comprend deux flancs latéraux 301, 302 liés par une paroi périphérique portant un tamis filtrant 303. Le flanc 302 est lié en rotation en son centre à l'arbre d'entrainement 20. Une goulotte 304 est solidarisée sur la paroi extérieure du flanc 302. Cette goulotte 304 s'étend autour de l'axe de rotation du tambour filtrant 30. Elle présente dans ce mode de réalisation une forme essentiellement tronconique. Le flanc 302 est traversé dans le prolongement de la goulotte 304 par des perforations d'écoulement d'eau. La canalisation d'extraction 272 débouche à l'intérieur de la goulotte 304. Ainsi, l'eau s'écoulant dans la canalisation d'extraction 272 se déverse dans la goulotte 304 puis s'écoule, à travers les perforations ménagées dans le flanc 302, à l'intérieur du tambour filtrant 30.

Le tambour filtrant 30 loge une goulotte 31 qui s'étend à proximité de sa périphérie intérieure. Cette goulotte 31 comprend une sortie qui est relié à une canalisation qui débouche dans un tube creux 32 auquel le flanc 301 est lié en rotation au moyen d'un palier 33 et qui passe à travers ce flanc 301. Le tube creux 32 s'étend dans l'axe de l'arbre d'entrainement 20. Une rampe d'injection d'eau de lavage 34 est placée à l'extérieur du tambour filtrant 30 en regard de la goulotte 31 placée à l'intérieur de celui-ci.

Le tube creux 32 débouche dans une canalisation 35 de recirculation de boues. Cette canalisation de recirculation 35 débouche à l'entrée 261 de la cuve de floculation 26.

Le flanc 301 porte des godets de relevage 36 prévus pour venir plonger dans l'eau filtrée située au fond de la cuve de filtration 29. Ces godets 36 affleurent le contour périphérique du tambour filtrant.

La cuve de filtration 29 loge une goulotte 37 d'évacuation d'eau filtrée qui débouche dans une zone de stockage d'eau filtrée 38 munie d'une sortie d'eau filtrée 39.

La goulotte 37 et les godets 36 sont agencés de manière telle que les godets, après avoir plongé dans l'eau filtrée située au fond de la cuve de filtration 29, déversent leur contenu dans la goulotte 37 alors qu'ils arrivent à sa hauteur.

Les cuves de stockage de réactifs 10, de coagulation 15, de floculation 26, de pré-décantation 27, de filtration 29 et de stockage d'eau filtrée 38 forment un ensemble monobloc, c'est-à-dire d'un seul tenant. Cet ensemble est refermé en partie supérieure par un couvercle 42.

La roue à godets 23 ainsi que les godets mélangeurs 231 et à leur façon les godets releveurs 230 constituent des premiers moyens d'agitation. La roue à pales 28 constitue des deuxièmes moyens d'agitation. Ces premiers et deuxièmes moyens d'agitation sont placés dans des cuves de traitement distinctes et sont entrainés en mouvement par des moyens d'entrainement communs à savoir le moteur et l'arbre d'entrainement.

Compte tenu de la possibilité de choisir le nombre de godets mélangeurs et de régler l'orientation des pales, les premiers et deuxièmes moyens d'agitation peuvent permettre de générer à l'intérieur de leur cuve respective des degrés d'agitation différents. De façon plus générale, les premiers et deuxièmes moyens d'agitation sont configurés pour générer des degrés d'agitation différents tout en étant entrainés par des moyens d'entrainement commun. Cette différence de degré d'agitation ne résultera donc pas de la vitesse des moyens d'entrainement mais de la forme et/ou du nombre et/ou de la position ou autre... des premiers et deuxièmes moyens d'agitation.

Selon le type de liquide traité au sein de l'installation qui vient d'être décrite, l'expression « eau » pourra être remplacée par l'expression « effluent industriel ».

### 6.1.2. Fonctionnement

Une installation selon l'invention peut par exemple être mise en oeuvre pour traiter de l'eau provenant de lagunes en vue de leur épuration avant rejet dans le milieu naturel. Elle pourrait aussi être utilisée pour traiter des eaux industrielles en vue de leur utilisation dans l'industrie, ou bien des eaux naturelles en vue de leur potabilisation, ou bien de eaux usées notamment municipales ou urbaines en vue de leur potabilisation, ou encore des effluents industriels en vue de leur rejet dans le milieu naturel.

Pour cela, de l'eau à traiter est acheminée, via la canalisation d'amenée 16, dans la cuve de coagulation 15.

Dans la variante mettant en oeuvre le caisson mélangeur 21, l'eau à traiter se déverse dans celui-ci. De même, le réactif coagulant se déverse dans le caisson mélangeur 21 via la canalisation d'injection 22.

L'arbre d'entrainement 20 est mis en rotation au moyen du moteur 19. La vitesse de rotation de l'arbre d'entrainement est préférentiellement linéaire et préférentiellement comprise entre 2 et 5 tours par minute.

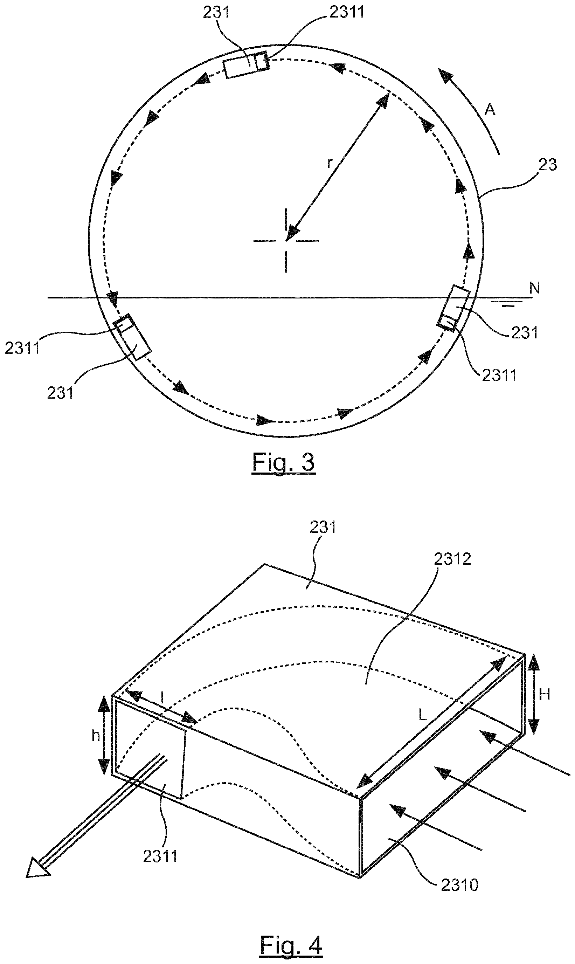

La roue à godets 23 ainsi que la roue à pales 28 sont ainsi animées d'un mouvement de rotation autour de l'axe de l'arbre d'entrainement 20 selon la flèche A (cf. figure 3).

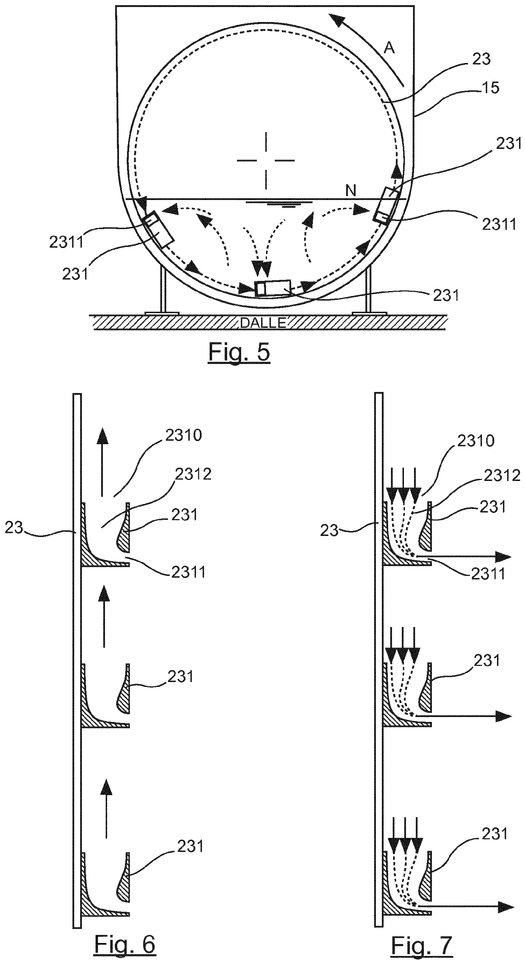

Lorsqu'un godet mélangeur 231 plonge dans l'eau contenue dans la partie inférieure de la cuve de coagulation 15 dont le niveau est matérialisé par le repère N sur la figure 3, une portion de cette eau pénètre le godet mélangeur 231 via son entrée 2310, s'écoule à l'intérieur du canal d'écoulement 2312, puis en ressort via la sortie 2311. Ce phénomène est illustré sur la figure 6 dont les flèches indiquent le sens de déplacement des godets mélangeurs 231 dans l'eau, et par la figure 7 dont les flèches représentent l'écoulement de l'eau à l'intérieur des godets mélangeurs 231.

Lorsque la section de l'entrée 2310 est supérieure à celle de la sortie 2311, l'écoulement de l'eau à l'intérieur du godet mélangeur 231 est accéléré. Lorsque leurs sections sont identiques, l'écoulement de l'eau à l'intérieur du godet mélangeur 231 n'est pas accéléré.

En effet, la vitesse d'entrée d'un godet mélangeur 231 dans l'eau contenue dans la cuve de coagulation est égale à 2 x Π x r, r étant la distance entre l'axe de rotation de l'arbre d'entrainement 20 et l'axe longitudinal du canal d'écoulement 2312 du godet mélangeur 231 (cf. figure 3).

En supposant que l'entrée 2310 présente une largeur L et une hauteur H, et que la sortie 2311 présente une largeur L et une hauteur h de valeur égale à celle de la hauteur H de l'entrée 2310, alors l'accélération généré à l'intérieur du godet mélangeur 231 est égale au rapport L/I. Cette accélération est plus généralement égale au rapport de la surface S de l'entrée sur la surface s de la sortie.

La vitesse de l'eau en sortie du godet mélangeur 2311 est alors égale au produit de sa vitesse d'entrée par cette accélération.

L'eau pénétrant le godet mélangeur 231 en est alors déviée latéralement à l'intérieur de la cuve de coagulation 15. Ceci génère de l'agitation à l'intérieur de la cuve de coagulation.

Lorsque le godet mélangeur 231 arrive au niveau du caisson mélangeur, l'eau qu'il dévie s'écoule en direction de la sortie 211 du caisson mélangeur 21. Cette eau pénètre alors à l'intérieur de ce caisson mélangeur 21 et y génère une agitation qui maximise le mélange de l'eau à traiter et du réactif coagulant à l'intérieur du caisson mélangeur 21. En effet le mélange se fait dans un volume réduit et le temps de contact est augmenté.

Lorsque le godet mélangeur 231 a passé le caisson mélangeur 21 et avant que le suivant se trouve dans le prolongement du caisson, l'eau contenue dans ce caisson s'écoule à l'intérieur de la cuve de coagulation 15.

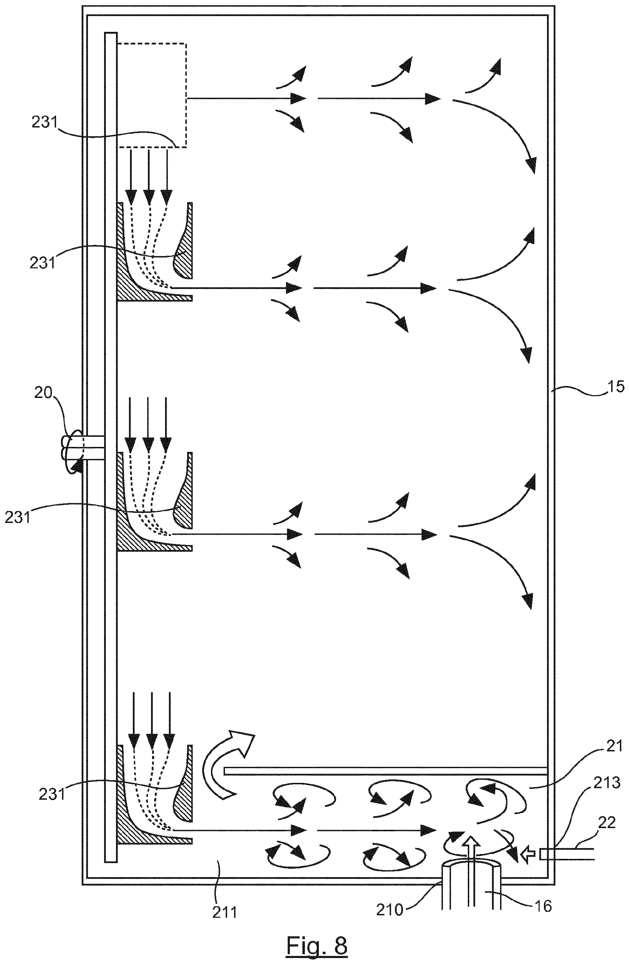

Les écoulements de fluide à l'intérieur de l'eau contenue dans la cuve de coagulation sont représentés par les flèches des figures 5 et 8. On observe une déviation essentiellement parallèlement à l'axe de rotation de la roue à godets, par exemple essentiellement horizontalement.

L'agitation générée à l'intérieur de la cuve de coagulation 15 permet d'améliorer le mélange entre l'eau à traiter et le réactif coagulant à l'intérieur de la cuve de coagulation 15. La technique selon l'invention permet d'éviter les zones mortes (non agitées) à l'intérieur de la cuve de coagulation.

Dans la variante ne mettant pas en oeuvre de caisson mélangeur 21, l'eau à traiter et le réactif coagulant se déversent directement dans la cuve de coagulation 15.

L'eau contenue dans la cuve de coagulation 15 est déviée latéralement par les godets mélangeurs 231 afin de générer de l'agitation propice au mélange de l'eau et du réactif coagulant. Lorsqu'un godet mélangeur 231 arrive au niveau de la sortie de la canalisation d'amenée d'eau à traiter 16 et de la sortie de la canalisation d'injection 22 de réactif coagulant, l'eau qu'il dévie latéralement s'écoule en direction des sorties de la canalisation d'amenée 16 et de la canalisation d'injection 22. Ceci permet d'améliorer encore d'avantage de mélange de l'eau à traiter et du réactif coagulant. Cette variante permet aussi d'éviter les zones mortes (non agitées) à l'intérieur de la cuve de coagulation.

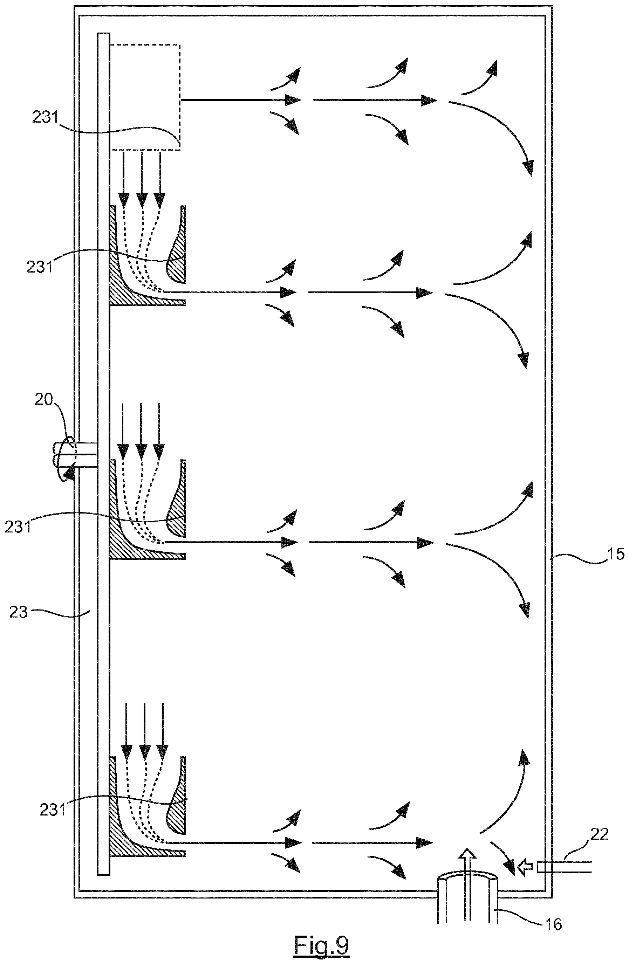

Les écoulements de fluide à l'intérieur de l'eau contenu dans la cuve de coagulation sont représentés par les flèches de la figure 9.

Dans des variantes, il pourra être prévu que les godets mélangeurs dévient latéralement l'eau à l'intérieur de la cuve de traitement mais pas nécessairement en direction des arrivées d'eau à traiter et de réactif.

L'eau subit à l'intérieur de la cuve de coagulation 15 une phase de coagulation.

Le mouvement des godets mélangeurs 231 et des godets de relevage 230 à l'intérieur de la cuve de coagulation 15 contribue également à y générer de l'agitation propice au mélange de l'eau à traiter et du réactif coagulant.

Les nombres de godets de mélange 231 et de godet de relevage 230 pourront être choisis en fonction des conditions d'exploitation, notamment en fonction de la nature des eaux à traiter, de la nature des réactifs mis en oeuvre, de la taille de l'installation, des débits à traiter, du niveau de rejet...

Par exemple, la taille des godets dépendra du volume de la cuve, et le nombre de godets dépendra de la densité du mélange (pour éviter les dépôts et être capable de remettre en suspension le mélange lorsque la machine s'arrête et redémarre).

Chaque fois qu'un godet de relevage 230 plonge sous l'effet de la rotation de la roue à godets 23, il se rempli d'eau, puis, alors qu'il remonte et se trouve au dessus de la goulotte 24, son contenu se déverse dans cette goulotte 24.

Du réactif floculant est injecté, via la canalisation d'injection 40, dans la goulotte 24.

Le mélange d'eau à traiter préalablement coagulée et de réactif floculant est alors acheminé dans la cuve de floculation 26 au moyen de la canalisation 25.

La roue à pales 28 est entrainée en rotation via l'arbre d'entrainement 20. Les pales 283 viennent au contact de l'eau contenue dans la cuve de floculation 26 et y génèrent de l'agitation. Lorsque les flancs 281 de la roue à pales 28 sont traversés par des trous 282 (ce qui est optionnel), un mouvement circulant d'eau est généré entre les trous 282 de chaque flanc 280 et l'extrémité périphérique extérieure de ceux-ci. Ceci tend à améliorer encore le brassage à l'intérieur de la cuve de floculation.

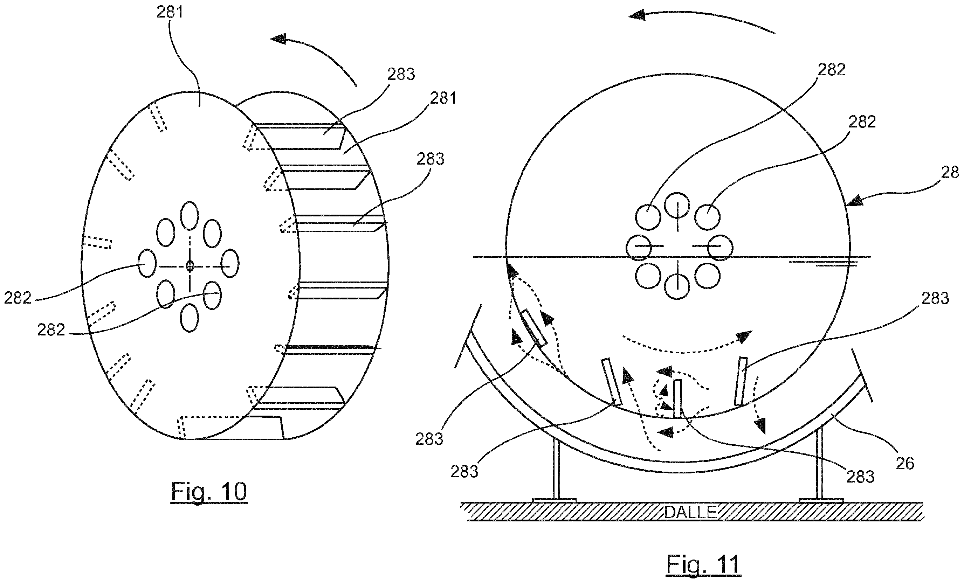

Les écoulements de fluide à l'intérieur de l'eau contenu dans la cuve de floculation sont représentés par les flèches des figures 11, 12 et 13.

Le nombre et l'inclinaison des pales pourront être choisis pour moduler le niveau d'agitation à l'intérieur de la cuve de floculation, notamment en fonction des conditions d'exploitation, de la nature des eaux à traiter, de la nature des réactifs mis en oeuvre, de la taille de l'installation, des débits à traiter, du niveau de rejet...

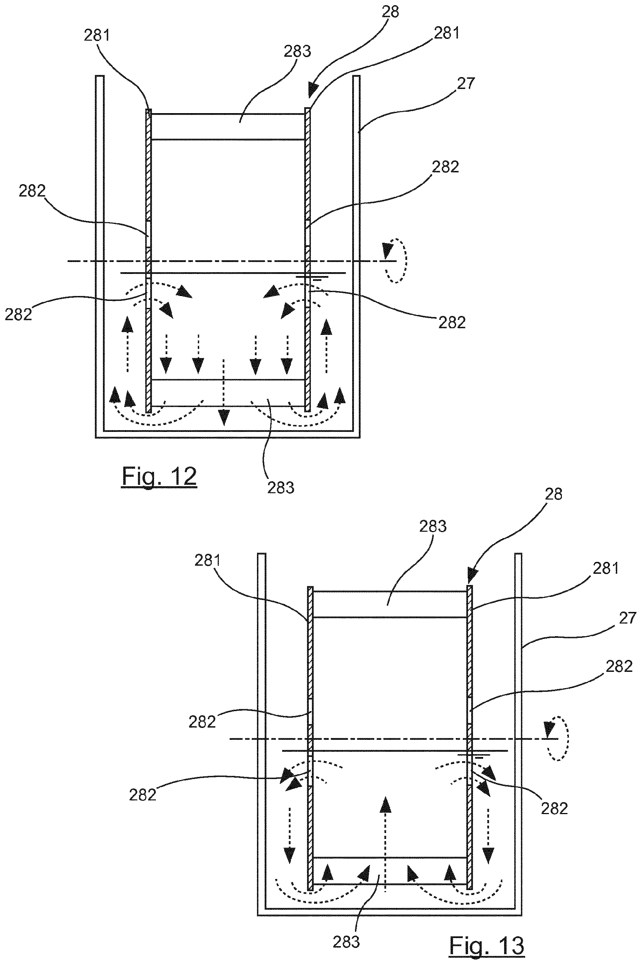

Selon l'inclinaison des pales, celles-ci pourront permettre de dévier l'eau plutôt vers le haut (cf. figure 13) ou plutôt vers le bas (cf. figure 12) ou bien générer peut de mouvement à l'intérieur de la cuve de floculation, en particulier lorsqu'elles s'étendent essentiellement tangentiellement à la roue à pales.

La mise en oeuvre de la roue à pales permet la formation de flocs solides à l'intérieur de la cuve de floculation tout en prévenant qu'ils ne se déposent au fond de celle-ci.

La technique selon l'invention permet d'éviter les zones mortes (non agitées) à l'intérieur de la cuve de floculation.

L'eau subit à l'intérieur de la cuve de floculation 26 une phase de floculation.

L'eau floculée provenant de la cuve de floculation s'écoule progressivement dans la cuve de pré-décantation 27 via le déversoir 262.

L'eau contenue dans la cuve de pré-décantation 27 y subit une phase de séparation liquide-solide au cours de laquelle des flocs résultants de la coagulation et la floculation respectivement mises en oeuvre au sein des cuves de coagulation 15 et de la floculation 26, se déposent au fond de la cuve de pré-décantation 27. Les boues ainsi obtenues sont extraites de cette cuve au moyen de la pompe 271. Les eaux décantées se déversent quant à elles dans la canalisation d'extraction 272 puis dans la goulotte 304. Elles s'écoulent ensuite à l'intérieur du tambour filtrant 30 en passant à travers les perforations ménagées dans son flanc 302.

Le tambour filtrant 30 est entrainé en rotation par l'arbre d'entrainement 20. Les eaux présentes à l'intérieur de celui-ci s'écoulent alors à travers le tamis filtrant 303. Les eaux filtrées s'écoulent à travers le tamis filtrant 303 dans le fond de la cuve de filtration 29.

Les godets releveurs 36 solidaires du flanc 301 du tambour filtrant 30 plongent un à un dans l'eau filtrée située au fond de la cuve de filtration 29 et se remplissent d'eau filtrée. Lorsqu'ils remontent et se trouvent au dessus de la goulotte 37, ils y déversent leur contenu. L'eau filtrée s'écoule alors dans la cuve de stockage 38 via la canalisation 37. Elle peut en être extraite pour être rejetée dans le milieu naturel ou acheminée vers un traitement aval.

Les godets releveurs 36 permettent de maintenir très faible le niveau d'eau filtrée dans le fond de la cuve de filtration. Ainsi, le tambour filtrant « barbotte » dans un faible volume d'eau. En d'autres termes, le tambour filtrant est faiblement immergé ce qui permet d'augmenter la surface de filtration du tamis et ainsi d'augmenter les capacités de production de l'installation.

Des phases de nettoyage du tamis filtrant 303 sont régulièrement mises en oeuvre. Celles-ci consistent à injecter de l'eau à la surface de celui-ci via la rampe d'injection 34. Cette eau de lavage décolle les boues colées sur la surface intérieure du tamis filtrant 303. Le mélange de boues et d'eau de lavage tombe dans la goulotte 31 puis s'écoulent dans le tube creux 32 avant d'être recirculé dans la cuve de floculation 26 au moyen de la canalisation 35.

Cette recirculation de boues optionnelle permet de réutiliser du réactif qui présenterait encore des capacités de traitement.

Selon le type de liquide traité au sein de l'installation, l'expression « eau » pourra être remplacée par l'expression « effluent industriel ».

### 6.2. Exemple d'un deuxième mode de réalisation d'une installation selon l'invention

### 6.2.1. Architecture

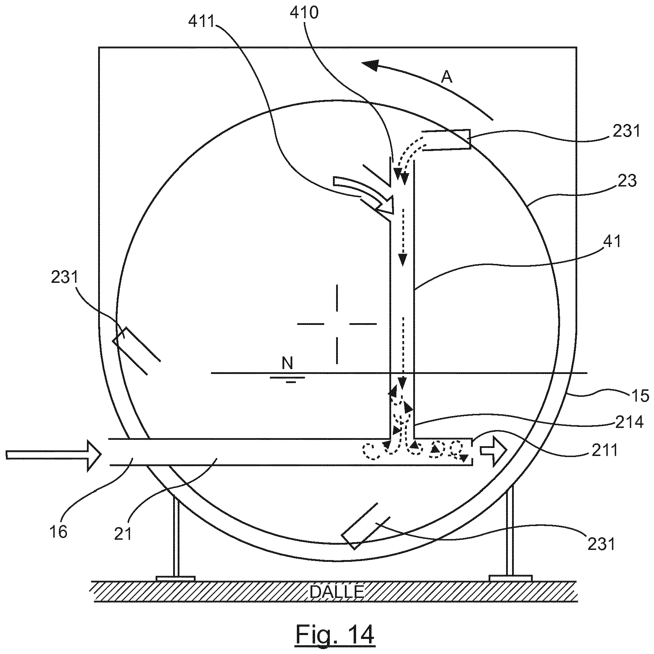

On présente, en relation avec la figure 14, un autre mode de réalisation d'une installation selon l'invention.

Ce mode de réalisation est identique au précédent hormis en ce qui concerne la structure des moyens d'agitation mis en oeuvre au sein de la cuve de coagulation 15.

La canalisation d'amenée d'eau à traiter 16 débouche dans un caisson mélangeur 21 qui s'étend à l'intérieur de la cuve de coagulation 15. Ce caisson mélangeur 21 présente à son extrémité une sortie 211. Il comprend également une entrée 214 à laquelle est reliée une canalisation de chute 41 qui s'étend à l'intérieur de la cuve de coagulation 15 essentiellement verticalement.

La canalisation de chute 41 comprend à son extrémité supérieure une entrée d'eau 410. Elle comprend également une entrée de réactif coagulant 411 reliée à la canalisation d'injection de réactif coagulant 22.

Les godets mélangeurs 231 ont une structure différente des godets mélangeurs selon le mode de réalisation précédent. Comme les godets de relevage 230, ils présentent ici la forme d'un récipient capable de se remplir lorsqu'il plonge dans l'eau contenue dans le fond de la cuve de coagulation 15, et de se vider alors qu'il remonte et se trouve en regard de l'entrée 410 de la canalisation de chute 41.

Ainsi, l'emplacement et l'inclinaison des godets mélangeurs 231 ainsi que la position de la canalisation de chute 41 sont choisis de manière telle que les godets mélangeurs 231 puissent déverser leur contenu dans la canalisation de chute 41 lorsque la roue à godets 23 les remontent dans le prolongement de l'entrée 410 de celle-ci.

Selon le type de liquide traité au sein de l'installation qui vient d'être décrite, l'expression « eau » pourra être remplacée par l'expression « effluent industriel ».

### 6.2.2. Fonctionnement

Afin de traiter de l'eau au moyen d'une installation selon ce mode de réalisation, l'eau à traiter est acheminée à l'intérieur du caisson mélangeur 21 au moyen de la canalisation d'amenée 16.

L'arbre d'entrainement 20 est entrainé en rotation via le moteur 19. La roue à godets 23 est ainsi entrainée en rotation à l'intérieur de la cuve de coagulation 15.

Les godets mélangeurs 231 plongent dans l'eau contenue au fond de la cuve de coagulation 15. Ils se remplissent d'eau puis remontent. Lorsqu'ils passent au dessus de la canalisation de chute 41, ils y déversent leur contenu à travers l'entrée 410.

Du réactif coagulant est injecté dans la canalisation de chute 41 via l'entrée 411.

L'eau tombant par gravité à l'intérieur de la canalisation de chute 41 est entrainée dans le caisson de mélange 21. Elle s'écoule alors essentiellement orthogonalement à l'axe de rotation de la roue à godets, par exemple essentiellement verticalement. Lorsqu'elle tombe dans celui-ci, elle y génère de l'agitation représentée par les flèches sur la figure 14. Cette agitation est propice au mélange de l'eau à traiter et du réactif coagulant à l'intérieur du caisson mélangeur 21. Le mélange ainsi obtenu s'écoule en dehors du caisson mélangeur 21 vers la cuve de coagulation 15 à travers la sortie 211.

Le mouvement des godets mélangeurs 231 et des godets de relevage 230 à l'intérieur de la cuve de coagulation contribue également à y générer de l'agitation propice au mélange de l'eau à traiter et du réactif coagulant.

Le fonctionnement d'une installation selon ce mode de réalisation est pour le reste similaire à celui d'une installation selon le premier mode de réalisation.

Selon le type de liquide traité au sein de l'installation, l'expression « eau » pourra être remplacée par l'expression « effluent industriel ».

### 6.3. Variantes

Une installation selon l'invention comprendra au moins deux cuves logeant chacune des moyens d'agitation, ces moyens d'agitation étant entrainés en mouvement par des moyens d'entrainement communs.

La cuve de stockage de réactif 10, la cuve de pré-décantation 27, la cuve de filtration 29 et la cuve de stockage 38 sont donc optionnelles. Elles peuvent être mises en oeuvre indépendamment les unes des autres.

## Revendications

1. Installation de traitement d'eau ou d'effluents industriels comprenant au moins :
- une première cuve de traitement (15) et une deuxième cuve de traitement (26) ;
- des premiers moyens d'agitation (23) logés dans ladite première cuve de traitement (15) et des deuxièmes moyens d'agitation (28) logés dans ladite deuxième cuve de traitement (26) ;
- des moyens d'entrainement (19, 20) desdits premiers (23) et deuxièmes (28) moyens d'agitation pour mettre en mouvement lesdits premiers (23) et deuxièmes (28) moyens d'agitation afin de générer de l'agitation respectivement dans lesdites première (15) et deuxième (26) cuves de traitement,
lesdits moyens d'entrainement (19, 20) étant communs auxdits premiers (23) et deuxièmes (28) moyens d'agitation et configurés pour générer des gradients d'agitation différents dans lesdites première (15) et deuxième (28) cuves de traitement,
ladite installation comprenant des moyens d'amenée (16, 21) d'eau ou d'effluent industriel à traiter dans ladite première cuve de traitement (15), **caractérisée en ce que** lesdits premiers moyens d'agitation (23) comprennent au moins un godet mélangeur (231) solidaire d'une roue à godets (23) montée mobile en rotation à l'intérieur de ladite première cuve de traitement (15), ledit au moins un godet mélangeur (231) étant orienté de manière à dévier une partie du contenu de ladite première cuve (15) essentiellement parallèlement ou orthogonalement à l'axe de rotation de ladite roue dans ladite première cuve (15) et/ou en direction desdits moyens d'amenée d'eau ou d'effluent industriel à traiter (16).

2. Installation selon la revendication 1, dans laquelle lesdits moyens d'amenée d'eau ou d'effluent industriel à traiter comprennent un caisson de mélange (21), ledit caisson de mélange (21) comprenant une entrée d'eau ou d'effluent industriel à traiter (210), une entrée d'un premier réactif (213), et une sortie (211) d'un mélange d'eau ou d'effluent industriel à traiter et de premier réactif débouchant dans ladite première cuve de traitement (15), ledit au moins un godet mélangeur (231) étant orienté de manière à dévier une partie du contenu de ladite première cuve (15) dans ledit caisson de mélange (21).

3. Installation selon la revendication 1 ou 2, dans laquelle ledit au moins un godet mélangeur (231) comprend une entrée (2310) ménagée sur sa face avant et une sortie (2311) ménagée latéralement.

4. Installation selon la revendication 3, dans laquelle ladite entrée (2310) présente une section plus grande que ladite sortie (2311) dudit au moins un godet mélangeur (231).

5. Installation selon la revendication 2, lesdits premiers moyens d'agitation (23) comprenant au moins :
- ledit au moins un godet mélangeur (231), et
- une canalisation de chute (41) s'étendant essentiellement verticalement, débouchant dans ledit caisson de mélange (21), et comprenant une entrée d'un premier réactif (411),
ledit au moins un godet mélangeur (231) étant orienté pour se déverser à l'intérieur de ladite canalisation de chute (41).

6. Installation selon l'une quelconque des revendications 1 à 5, comprenant une pluralité de moyens de solidarisation réversible de godets mélangeurs (231) à ladite roue à godets (23), lesdits godets mélangeurs (231) étant amovibles.

7. Installation selon l'une quelconque des revendications 1 à 6, comprenant des moyens d'acheminement du contenu de ladite première cuve de traitement (15) dans ladite deuxième cuve de traitement (26), lesdits moyens d'acheminement comprenant :
- des godets de relevage (230) solidaires de ladite roue à godets (23), et
- une goulotte (24) débouchant dans ladite deuxième cuve de traitement (26),
lesdits godets de relevage (230) étant orientés par rapport à ladite goulotte (24) pour déverser leur contenu dans ladite goulotte (24).

8. Installation selon l'une quelconque des revendications 1 à 7, dans laquelle lesdits deuxièmes moyens d'agitation comprennent une roue à pales (28) montée mobile en rotation à l'intérieur de ladite deuxième cuve de traitement (26).

9. Installation selon la revendication 8, dans laquelle lesdites pales (283) sont montées mobiles en rotation autour d'axes sensiblement parallèles à l'axe de rotation de ladite roue à pales (28), l'installation comprenant des moyens de réglage de l'orientation desdites pales (281) autour desdits axes.

10. Installation selon la revendication 8 ou 9, dans laquelle ladite roue à pales (28) comprend deux flancs latéraux (281) entre lesquels sont placées lesdites pales (283), lesdits flancs latéraux (281) étant traversés par des trous (282) s'étendant selon des axes essentiellement parallèles à l'axe de rotation de ladite roue à pales (28).

11. Installation selon une quelconque des revendications 1 à 10, dans laquelle lesdits moyens d'entrainement comprennent un arbre d'entrainement (20) et un moteur (19) dont la sortie est liée en rotation audit arbre d'entrainement (20), lesdites roues à godets (23) et à pales (28) étant liées en rotation audit arbre d'entrainement (20).

12. Installation selon la revendication 11, comprenant une cuve de filtration (29), ladite cuve de filtration (29) logeant un tambour filtrant rotatif (30) lié en rotation audit arbre d'entrainement (20), ladite installation comprenant des moyens d'acheminement du contenu de ladite deuxième cuve (26) dans ledit tambour filtrant (30).

13. Installation selon la revendication 12, comprenant une cuve de pré-décantation (27) placée entre ladite deuxième cuve de traitement (26) et ladite cuve de filtration (29), ladite cuve de pré-décantation (27) comprenant des moyens d'extraction de boues (271) et des moyens d'évacuation d'eau ou d'effluents industriels pré-décantés (272) débouchant dans ledit tambour filtrant (30).

14. Installation selon la revendication 12 ou 13, comprenant des moyens d'extraction et de relevage (36) de l'eau ou d'effluent industriel filtrée provenant de ladite cuve de filtration (29).

15. Installation selon l'une quelconque des revendications 1 à 14 comprenant une cuve de stockage (10) desdits réactifs, ladite cuve de stockage (10) étant placée en amont de ladite première cuve de traitement (15).

16. Installation selon l'une quelconque des revendications 1 à 15, dans laquelle lesdites cuves (10, 15, 26, 27, 29, 38) sont solidaires les unes des autres et forment un ensemble monobloc.

## Patentansprüche

1. Anlage zur Aufbereitung von Wasser oder Industrieabwässern, umfassend mindestens:
- einen ersten Aufbereitungstank (15) und einen zweiten Aufbereitungstank (26);
- erste Rührmittel (23), die in dem ersten Aufbereitungstank (15) untergebracht sind, und zweite Rührmittel (28), die in dem zweiten Aufbereitungstank (26) untergebracht sind;
- Antriebsmittel (19, 20) der ersten (23) und zweiten (28) Rührmittel, um die ersten (23) und zweiten (28) Rührmittel in Bewegung zu setzen, um das Rühren jeweils in dem ersten (15) und den zweiten (26) Aufbereitungstank zu erzeugen;
wobei die Antriebsmittel (19, 20) für die ersten (23) und zweiten (28) Rührmittel gemeinsam sind und konfiguriert sind, um verschiedene Gradienten des Rührens in dem ersten (15) und zweiten (28) Aufbereitungstank zu erzeugen,
wobei die Anlage Mittel (16, 21) zum Zuführen von aufzubereitendem Wasser oder Industrieabwasser in den ersten Aufbereitungstank (15) aufweist,
**dadurch gekennzeichnet, dass** die ersten Rührmittel (23) mindestens einen Mischbecher (231) aufweisen, der mit einem Becherrad (23) fest verbunden ist, das drehbar im Inneren des ersten Aufbereitungstanks (15) befestigt ist, wobei der mindestens eine Mischbecher (231) ausgerichtet ist, um einen Teil des Inhalts des ersten Tanks (15) im Wesentlichen parallel oder orthogonal zur Drehachse des Rads in dem ersten Tank (15) und/oder in Richtung der Mittel zum Zuführen von aufzubereitendem Wasser oder Industrieabwasser (16) umzuleiten.

2. Anlage nach Anspruch 1, wobei die Mittel zum Zuführen von aufzubereitendem Wasser oder Industrieabwasser eine Mischkammer (21) aufweisen, wobei die Mischkammer (21) einen Einlass des aufzubereitendem Wassers oder Industrieabwassers (210), einen Einlass eines ersten Reagenz (213) und einen Auslass (211) einer Mischung von aufzubereitendem Wasser oder Industrieabwasser und erstem Reagenz, der in den ersten Aufbereitungstank (15) mündet, wobei der mindestens eine Mischbecher (231) ausgerichtet ist, um einen Teil des Inhalts des ersten Tanks (15) in die Mischkammer (21) umzuleiten.

3. Anlage nach Anspruch 1 oder 2, wobei der mindestens eine Mischbecher (231) einen Einlass (2310), der auf ihrer Vorderseite ausgebildet ist, und einen Auslass (2311) aufweist, der seitlich ausgebildet ist.

4. Anlage nach Anspruch 3, wobei der Einlass (2310) einen Querschnitt aufweist, der größer als der Auslass (2311) des mindestens einen Mischbechers (231) ist.

5. Anlage nach Anspruch 2, wobei die ersten Rührmittel (23) mindestens Folgendes aufweisen:
- den mindestens einen Mischbecher (231) und
- eine Fallrohrleitung (41), die sich im Wesentlichen vertikal erstreckt, die in die Mischkammer (21) mündet und die einen Einlass eines ersten Reagenz (411) aufweist,
wobei der mindestens eine Mischbecher (231) ausgerichtet ist, um in das Innere der Fallrohrleitung (41) ausgegossen zu werden.

6. Anlage nach einem der Ansprüche 1 bis 5, umfassend mehrere Mittel zum reversiblen Befestigen von Mischbechern (231) an dem Becherrad (23), wobei die Mischbecher (231) abnehmbar sind.

7. Anlage nach einem der Ansprüche 1 bis 6, umfassend Mittel zum Befördern des Inhalts des ersten Aufbereitungstanks (15) in den zweiten Aufbereitungstank (26), wobei die Mittel zum Befördern Folgendes aufweisen:
- Hebebecher (230), die mit dem Becherrad (23) fest verbunden sind, und
- eine Rinne (24), die in den zweiten Aufbereitungstank (26) mündet,
wobei die Hebebecher (230) in Bezug auf die Rinne (24) ausgerichtet sind, um ihren Inhalt in die Rinne (24) zu gießen.

8. Anlage nach einem der Ansprüche 1 bis 7, wobei die zweiten Rührmittel ein Schaufelrad (28) aufweisen, das im Inneren des zweiten Aufbereitungstanks (26) drehbar befestigt ist.

9. Anlage nach Anspruch 8, wobei die Schaufeln (283) drehbar um Achsen befestigt sind, die im Wesentlichen parallel zu der Drehachse des Schaufelrads (28) sind, wobei die Anlage Mittel zum Einstellen der Ausrichtung der Schaufeln (281) um die Achsen aufweist.

10. Anlage nach Anspruch 8 oder 9, wobei das Schaufelrad (28) zwei Seitenflanken (281) aufweist, zwischen denen die Schaufeln (283) angeordnet sind, wobei die Seitenflanken (281) von Löchern (282) durchquert sind, die sich entlang von Achsen erstrecken, die im Wesentlichen parallel zu der Drehachse des Schaufelrads (28) sind.

11. Anlage nach einem der Ansprüche 1 bis 10, wobei die Antriebsmittel eine Antriebswelle (20) und einen Motor (19) aufweisen, dessen Ausgang drehfest mit der Antriebswelle (20) verbunden ist, wobei das Becherrad (23) und das Schaufelrad (28) drehfest mit der Antriebswelle (20) verbunden sind.

12. Anlage nach Anspruch 11, umfassend einen Filtertank (29), wobei in dem Filtertank (29) eine drehbare Filtertrommel (30) untergebracht ist, die drehfest mit der Antriebswelle (20) verbunden ist, wobei die Anlage Mittel zum Befördern des Inhalts des zweiten Tanks (26) in die Filtertrommel (30) aufweist.

13. Anlage nach Anspruch 12, umfassend einen Vorklärtank (27), der zwischen dem zweiten Aufbereitungstank (26) und dem Filtertank (29) angeordnet ist, wobei der Vorklärtank (27) Mittel zum Extrahieren von Schlämmen (271) und Mittel zum Ableiten von Wasser oder vorgeklärten Industrieabwässern (272) aufweist, die in die Filtertrommel (30) münden.

14. Anlage nach Anspruch 12 oder 13, umfassend Mittel zum Extrahieren und Anheben (36) von dem gefiltertem Wasser oder Industrieabwasser, das aus dem Filtertank (29) kommt.

15. Anlage nach einem der Ansprüche 1 bis 14, umfassend einen Speichertank (10) der Reagenzien, wobei der Speichertank (10) vorgelagert vor dem ersten Aufbereitungstank (15) angeordnet ist.

16. Anlage nach einem der Ansprüche 1 bis 15, wobei die Tanks (10, 15, 26, 27, 29, 38) miteinander fest verbunden sind und eine einstückige Anordnung bilden.

## Claims

1. Plant for treating water or industrial effluents comprising at least:
- one first treatment tank (15) and one second treatment tank (26);
- first stirring means (23) housed in said first treatment tank (15) and second stirring means (28) housed in said second treatment tank (26);
- driving means (19, 20) for driving said first and said second stirring means (28) to set in motion said first stirring means (23) and said second stirring means (28) in order to generate the stirring respectively in said first and second treatment tank (16),
said driving means (19, 20) being common to said first and second stirring means (28) and being configured to generate different stirring gradients in said first and second treatment tank (28), said plant comprising means (16, 21) for conveying water or industrial effluent to be treated into said first treatment tank (15),
**characterized in that** said first stirring means (23) comprise at least one mixing bucket (231) linked to a bucket wheel (23) mounted so as to be rotationally mobile within said first treatment tank (15), said at least one mixing bucket (231) being oriented so as to deflect a part of the content of said first tank (15) essentially in parallel or orthogonally to the rotational axis of said wheel within said first treatment tank (15) and/or towards said means for conveying water or industrial effluent to be treated (16).

2. Plant according to claim 1, wherein said means for conveying water or industrial effluent to be treated comprise a mixing box (21), said mixing box (21) comprising an inlet for water or industrial effluent to be treated (210), an inlet for a first reagent (213) and an outlet (211) for a mixture of water or industrial effluent to be treated and first reagent, the outlet opening into said first treatment tank (15), said at least one mixing bucket (231) being oriented so as to deflect a part of the contents of said first tank (15) into said mixing box (21).

3. Plant according to claim 1 or 2, wherein said at least one mixing bucket (231) comprises an inlet (2310) made on its front face and an outlet (2311) made laterally.

4. Plant according to claim 3, wherein said inlet (2310) has a greater section than said outlet (2311) of said at least one mixing bucket (231).

5. Plant according to claim 2, said first means (23) for stirring comprising at least:
- said at least one mixing bucket (231), and
- a fall-pipe (41) extending essentially vertically, opening into said mixing box (21) and comprising an inlet for a first reagent (411),
said at least one mixing bucket (231) being oriented so as to pour its contents into said fall-pipe (41).

6. Plant according to any one of the claims 1 to 5, comprising a plurality of means for the reversible attaching of the mixing buckets (231) to said bucket wheel (23), said mixing buckets (231) being detachable.

7. Plant according to any one of the claims 1 to 6, comprising means for conveying the content of said first treatment tank (15) into said second treatment tank (26), said means for conveying comprising:
- lifting buckets (230) linked to said bucket wheel (23), and
- a chute (24) opening into said second treatment tank (26),
said lifting buckets (230) being oriented relative to said chute (24) to pour their contents into said chute (24).

8. Plant according to any one of the claims 1 to 7, wherein said second means for stirring comprise a paddle wheel (28) mounted so as to be rotationally mobile within said second treatment tank (26).

9. Plant according to claim 8, wherein said paddles (283) are mounted so as to be rotationally mobile around axes appreciably parallel to the axis of rotation of said paddle wheel (28), the plant comprising means for setting the orientation of said paddles (281) around said axes.

10. Plant according to claim 8 or 9, wherein said paddle wheel (28) comprises two lateral flanks (281) between which are placed said paddles (283), said lateral flanks (281) being crossed by holes (282) extending along axes essentially parallel to the axis of rotation of said paddle wheel (28).

11. Plant according to any one of the claims 1 to 10, in which said driving means comprise a driveshaft (20) and a motor (19), the output of which is rotationally linked to said driveshaft (20), said bucket wheel (23) and paddle wheel (28) being rotationally linked to said driveshaft (20).

12. Plant according to claim 11, comprising a filtration tank (29), said filtration tank (29) housing a rotational filter drum (30) rotationally linked to said driveshaft (20), said plant comprising means for conveying the contents of said second tank (22) into said filter drum (30).

13. Plant according to claim 12, comprising a pre-decantation tank (27) placed between said second treatment tank (26) and said filtration tank (29), said pre-decantation tank (27) comprising means for extracting sludges (271) and means for discharging pre-decanted water or industrial effluent (272) opening into said filter drum (30).

14. Plant according to claim 12 or 13, comprising means for extracting and lifting (36) filtered water or industrial effluent coming from said filtration tank (29).

15. Plant according to any one of the claims 1 to 14, comprising a storage tank (10) for storing said reagents, said storage tank (10) being placed upstream to said first treatment tank (15).

16. Plant according to any one of the claims 1 to 15, wherein said tanks (10, 15, 26, 27, 29, 38) are linked to each other and form a single-block unit.
